# FASCICULE DE BREVET EUROPEEN

(11) **EP 0 375 001 B1**
(45) Date de publication et mention de la délivrance du brevet: **17.03.1993**
(21) Numéro de dépôt: 89203076.8
(22) Date de dépôt: 05.12.1989
(51) Int. Cl.: F16C 17/12

(54) **Palier à film fluide**
Fluidfilmlager
Fluid film journal bearing

(30) Priorité: 23.12.1988 FR 8817080
(43) Date de publication de la demande: 27.06.1990
(73) Titulaire: ABG SEMCA S.A., 31016 Toulouse Cédex (FR)
(72) Inventeur: Signoret, Jacques, F-31200 Toulouse (FR); Hermel, Pascal, F-31500 Toulouse (FR); Jambou, André, F-31140 Castelginest (FR)
(74) Mandataire: Barre, Philippe

(56) Documents cités:
- EP-A- 0 254 566
- FR-A- 1 517 739
- FR-A- 2 352 985
- FR-A- 2 516 996
- US-A- 1 684 693
- US-A- 4 208 076
- US-A- 4 795 274

## Description

La présente invention concerne un palier à fluide et plus particulièrement l'amélioration de la capacité de charge et de la stabilité d'un tel palier.

Les paliers à fluide sont de plus en plus utilisés dans des applications de machines tournantes à grande vitesse où une lubrification par huile n'est pas envisageable compte-tenu des conditions d'environnement techniques ou économiques. Le principe de ces paliers consiste à créer un coin d'air sous pression entre un mobile tournant et une surface fixe.

Ces paliers sont destinés à soutenir un arbre tournant. Ils sont généralement constitués par un alésage sur la circonférence duquel est réparti un ensemble de feuilles. Ces feuilles portent sur le côté face à l'arbre tournant, un revêtement auto-lubrifiant pour assurer le démarrage de l'arbre supporté avec une usure minimale. Un raidisseur est placé entre les feuilles et l'alésage. Ce raidisseur contrôle l'excentration de l'arbre sous l'effet de la charge et contrôle également l'amortissement par friction entre feuille et raidisseur nécessaire pour augmenter la vitesse limite supérieure jusqu'à laquelle le palier peut fonctionner.

Les problèmes liés au fonctionnement d'un palier sont différents suivant qu'il s'agit de la phase de démarrage ou de la phase de fonctionnement sous charge.

Au démarrage, les feuilles doivent être très souples avec une faible précharge pour minimiser l'effort de frottement entre l'arbre et la feuille.

Lors du fonctionnement sous charge, la tenue à la charge de la feuille nécessite une raideur plus importante que dans la phase de démarrage. Cette raideur plus importante est obtenue par un raidisseur dont l'action intervient après la phase de démarrage pour incliner la feuille dans la position adéquate suivant la charge qui lui est appliquée.

Lors du fonctionnement sous charge, il est également nécessaire d'amortir le palier à fluide pour éviter ou diminuer l'effet des résonnances pouvant amener à la rupture à des vitesses critiques inférieures à la vitesse nominale de fonctionnement. Dans le cas de l'air, qui est un fluide peu visqueux, l'amortissement se fait principalement par dissipation d'énergie par frottements secs, dits frottements de Coulomb.

Différentes tentatives ont été faites pour résoudre ces problèmes, et des dispositifs ont été décrits à cet effet notamment dans le brevet US 1.684.693 (Böhn) et les brevets français N° 1.517.739 et N° 2.352.985.

Le brevet français N° 2.352.985 décrit notamment un palier radial hydrodynamique à film de fluide comportant un fourreau dans lequel est libre en rotation un arbre, le fourreau et l'arbre formant entre eux un espace annulaire logeant une pluralité de sous-ensembles de palier comportant chacun :
- une lame souple séparée de l'arbre, dont elle épouse partiellement le contour, par une couche de film fluide, ladite lame étant solidaire d'une barrette fixée par insertion dans une gorge ménagée dans le fourreau, et
- des raidisseurs supérieur et inférieur placés entre la lame souple et le fourreau auquel ils sont fixés et adaptés pour amortir les déformations de la lame souple.

Cependant, dans ce brevet, les raidisseurs supérieur et inférieur sont solidaires d'une même barrette. Il en résulte qu'un tel palier présente des caractéristiques mécaniques d'amortissement faibles car les raidisseurs ne permettent pas une dissipation d'énergie importante.

Les présents inventeurs ont alors cherché à apporter une amélioration supplémentaire aux paliers à fluide et ils ont conçu un palier radial hydrodynamique à film de fluide qui est caractérisé en ce que le raidisseur supérieur et le raidisseur inférieur de chaque sous-ensemble de palier sont fixés à deux barrettes distinctes de deux sous-ensembles adjacents et sont superposés sur au moins une partie de l'une de leurs faces pour coulisser l'un par rapport à l'autre et en sens inverse.

Au démarrage, le palier doit présenter un coin prononcé pour amorcer le film fluide. A cet effet, dans chaque sous-ensemble de palier, un ressort de précharge sera placé avantageusement entre la barrette et le fourreau.

Une autre solution consiste à préformer les lames souples, les raidisseurs inférieurs ou les raidisseurs supérieurs. Dans ce cas, l'élément préformé joue un rôle analogue à celui du ressort de précharge.

La raideur de démarrage obtenue par l'un de ces procédés est faible par rapport à la raideur en fonctionnement.

De préférence, dans chaque sous-ensemble de palier, le raidisseur supérieur 3 présente des parties saillantes sur sa face supérieure, le raidisseur inférieur 4 présente des parties saillantes sur sa face inférieure, les parties saillantes de l'un des raidisseurs étant alternées avec les parties saillantes de l'autre raidisseur, lesdites parties saillantes constituant des appuis.

Dans un tel dispositif, un frottement de la partie lisse de chaque raidisseur supérieur et inférieur en regard se produit lors des mouvements verticaux engendrés par l'intermédiaire des appuis sous l'effet des fluctuations de charge. Pour cela, les raidisseurs sont maintenus à une de leurs extrémités sans possibilité de bouger dans la direction du mouvement du sous-ensemble. L'un des raidisseurs est maintenu contre la barrette amont, l'autre contre la barrette aval. Les ondulations produites lors de la déformation sous charge entraînent un glissement relatif en sens inverse des deux raidisseurs, d'où frottement et absorption d'énergie.

Les parties lisses en regard de chaque raidisseur peuvent être revêtues d'un revêtement choisi pour ajuster l'effet d'amortissement.

Lors du fonctionnement sous charge, l'ensemble des lames et raidisseurs vient en appui en rattrapant la déformation induite par l'effet du ressort de démarrage ou de l'élément qui en tient lieu. L'élasticité est obtenue par enfoncement vertical des appuis sur les raidisseurs. Les appuis supérieurs et inférieurs sont disposés de telle manière que, sous charge, l'inclinaison du palier reste proche de l'inclinaison optimale. En effet, si l'inclinaison s'écarte trop de l'idéal, la capacité de charge peut devenir nulle.

La variation d'inclinaison en fonction de la charge est obtenue par enfoncement de l'ensemble, l'avant, le centre et l'arrière du palier ne s'enfonçant pas de la même valeur en fonction de la charge.

Dans une variante préférée, des découpes peuvent être ménagées dans les raidisseurs supérieurs 3, ou simultanément dans les raidisseurs inférieurs et supérieurs, de manière à affaiblir localement ces éléments pour obtenir la déformation optimale souhaitée.

Dans une autre variante de l'invention, chaque lame souple 2 a une dimension telle que son extrémité libre recouvre l'extrémité fixe de la lame contiguë. Un amortissement supplémentaire est ainsi obtenu par le frottement de ces lames souples les unes sur les autres.

En outre, la lame souple 2 d'un sous-ensemble de palier peut être percée immédiatement en aval du sous-ensemble précédent, de manière à alimenter correctement en gaz la partie active de la lame suivante.

De préférence, ces lames peuvent porter un revêtement de matériau comportant un constituant auto-lubrifiant, par exemple du polytétrafluoroéthylène (PTFE).

Un palier selon l'invention comporte de préférence de 2 à 9 sous-ensembles de palier tels que définis précédemment.

La présente invention sera expliquée plus en détail, de manière non limitative, par référence aux dessins annexés.

Dans ces dessins, les figures 1 à 3 représentent chacune une vue en coupe transversale de trois variantes de paliers selon l'invention.

Les figures 4 et 5 représentent une vue en coupe de deux types de raidisseurs.

La figure 6 représente une partie d'une coupe transversale d'une quatrième variante.

La figure 7 représente une vue schématique d'un avion comportant des paliers selon l'invention.

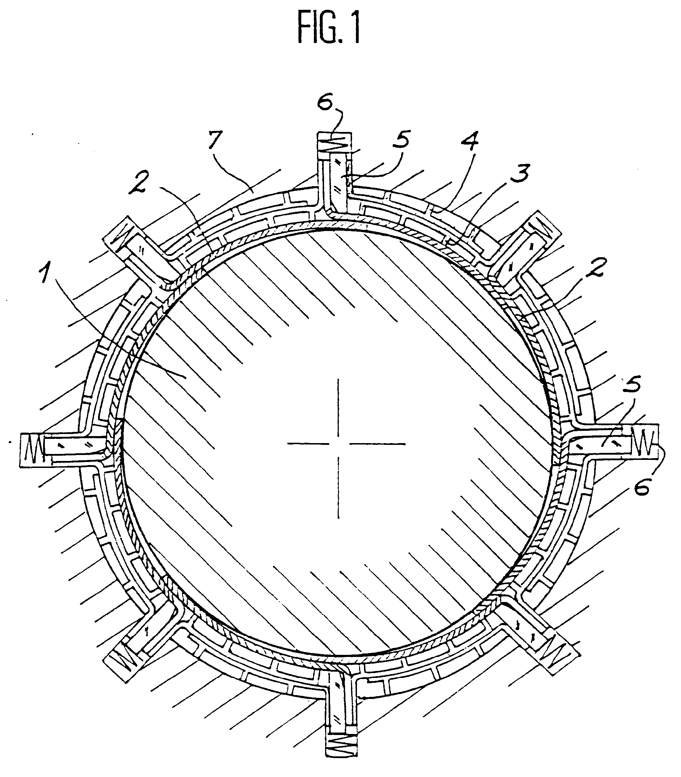

Le palier tel qu'illustré sur la figure 1, destiné à soutenir l'arbre 1, comporte un fourreau 7 dans lequel sont insérées des barrettes 5. Des ressorts 6 sont placés entre les barrettes 5 et le fourreau 7.

Sur chaque barrette 5, sont fixés un raidisseur inférieur 4, un raidisseur supérieur 3 et une lame souple 2. Les deux raidisseurs d'un même sous-ensemble de palier coulissent radialement contre les barrettes contiguës. Les lames souples 2 se recouvrent partiellement.

Les raidisseurs 3 et 4 sont constitués chacun d'une feuille métallique pliée pour former une partie de montage. La face de chaque raidisseur portant les parties saillantes est rainurée pour former des nervures et des gorges qui alternent et qui sont disposées longitudinalement par rapport à l'arbre.

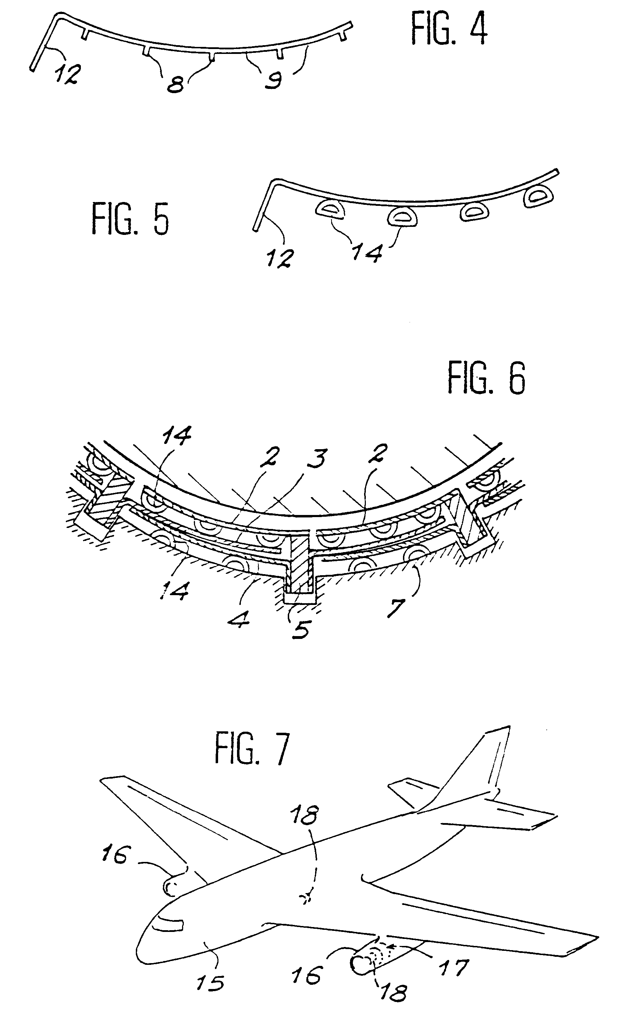

Un tel raidisseur est représenté sur la figure 4 dans laquelle 12 désigne la partie de montage, 8 désigne les nervures et 9 les gorges de la face portant des parties saillantes.

A l'arrêt, la lame 2 est appliquée contre l'arbre 1 par la barrette 5 elle-même poussée par le ressort de précharge 6. La lame 2 n'est pas appliquée contre le raidisseur supérieur 3 et travaille sur sa raideur propre. De manière à optimiser au démarrage le produit PV (pression x vitesse) entre l'arbre et le revêtement autolubrifiant de la lame 2, la précharge est adaptée indépendamment de toutes les autres fonctions du palier en choisissant raideur et effort du ressort 6. Cette raideur est bien inférieure à celle des deux raidisseurs 3 et 4. L'influence du ressort 6 ne se fait pratiquement sentir qu'au démarrage.

En fonctionnement stable, un champ de pression généré par la rotation de l'arbre 1 s'établit entre l'arbre 1 et la lame 2. Ce champ plaque la lame 2 contre les raidisseurs 3 et 4 qui s'enfoncent radialement suivant l'intensité de la charge.

En fonctionnement à tendance instable, le champ de pression fluctue, entraînant un déplacement radial de la lame 2. Ce déplacement radial entraîne un déplacement relatif circonférentiel entre deux lames, ce qui induit un premier amortissement par friction l'une sur l'autre des parties en recouvrement de ces lames qui s'établissent alors sur un diamètre différent.

Un deuxième amortissement par friction plus important est donné par le déplacement relatif circonférentiel de la lame 2 et du raidisseur 3.

Un troisième amortissement par friction est donné par le déplacement relatif circonférentiel du raidisseur supérieur 3 et du raidisseur inférieur 4.

En outre, la présence d'un ressort de précharge permet d'additionner en un seul élément les avantages d'amortissement provenant du frottement au recouvrement des différents éléments et les avantages de charge et d'amortissement améliorés des deux raidisseurs.

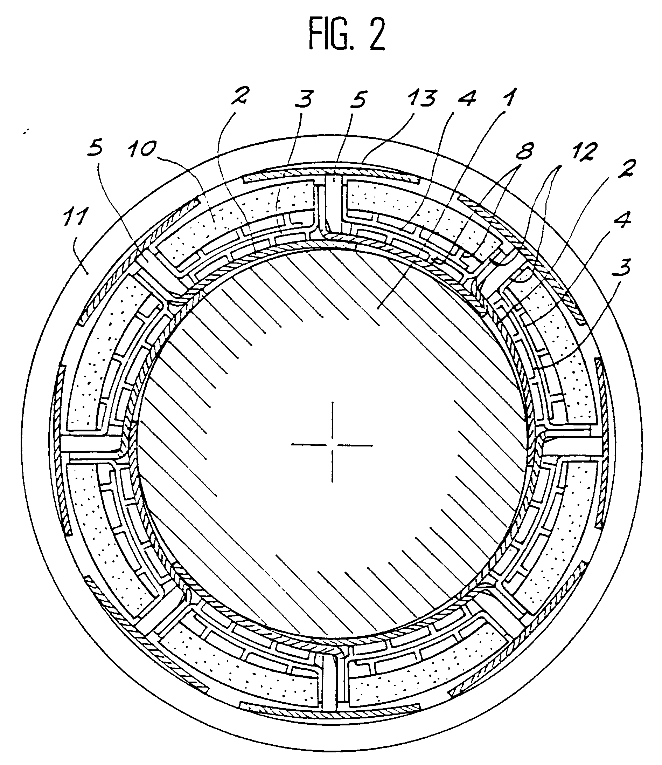

Sur la figure 2 est représenté un palier analogue à celui de la figure 1, à l'exception du ressort de précharge. Sur cette figure, les éléments équivalents à ceux du palier de la figure 1 sont désignés par les mêmes références. Le fourreau est constitué de deux parties: un fourreau intérieur 10 traversé par les barrettes 5 et un fourreau extérieur 11. Un ressort-lame 13 est situé à l'extrémité de la barrette opposée à l'arbre, entre le fourreau intérieur 10 et le fourreau extérieur 11. Le palier de cette figure 2 fonctionne d'une manière analogue à celle du palier de la figure 1, aussi bien au démarrage qu'en fonctionnement stable ou à tendance instable.

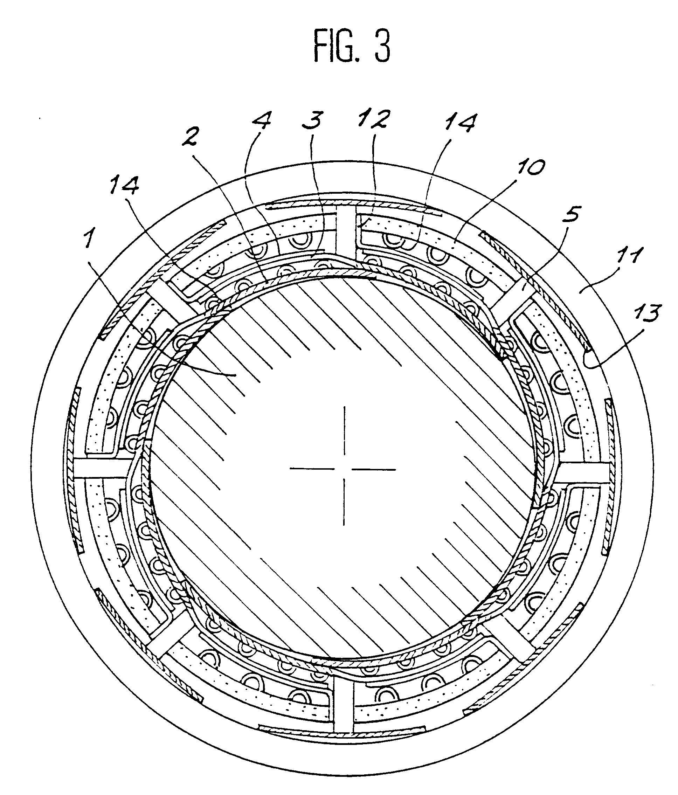

La figure 3 représente un palier muni d'un ressort-lame 13 identique à celui de la figure 2. Le raidisseur externe 4 est du type représenté à la figure 5. Il est constitué par une feuille métallique présentant une courbure et pliée pour former une partie de montage 12. Les appuis 14 sont constitués par des baguettes creuses à section semi-circulaire, soudées par points sur la feuille métallique. La lame souple 2 d'un sous-ensemble de palier est le prolongement du raidisseur supérieur 3 due sous-ensemble contigu, formant une feuille unique. La zone par laquelle cette feuille unique est fixée sur la barrette 5 constitue la limite entre la lame souple et le raidisseur supérieur. Les parties saillantes du raidisseur supérieur sont identiques à celles du raidisseur inférieur 4 et disposées en alternance avec celles du raidisseur 4. Dans cette variante, les lames souples 2 et les raidisseurs se comportent de la même manière que dans les variantes des figures 1 ou 2.

La figure 6 représente une vue en coupe d'une partie d'un palier conforme à l'invention dans une autre variante. Le raidisseur inférieur 3 est du type représenté à la figure 5. Le raidisseur supérieur 4 est d'un type analogue. Les courbures des deux raidisseurs sont différentes, créant ainsi l'équivalent d'un ressort de précharge. Après le démarrage, la charge plaque le raidisseur supérieur contre le raidisseur inférieur. En outre, il n'y a aucun recouvrement entre deux lames souples 2 contiguës. Ces lames sont séparées.

Sur la figure 7 est représenté un avion 15 muni de réacteurs 16. Les réacteurs 16 comportent des turbomachines 17 comportant elles-mêmes des paliers 18 selon l'invention.

Les perfectionnements apportés aux paliers selon l'invention permettent d'augmenter la tenue en charge des paliers. Cette propriété est particulièrement intéressante lorsque les paliers sont utilisés dans des turbomachines, a fortiori lorsque celles-ci font partie d'aéronefs, plus particulièrement d'avions militaires.

## Revendications

1. Palier radial hydrodynamique à film de fluide comportant un fourreau (7; 10,11) dans lequel est libre en rotation un arbre (1), le fourreau (7;10,11) et l'arbre (1) formant entre eux un espace annulaire logeant une pluralité de sous-ensembles de palier comportant chacun :
- une lame souple (2) séparée de l'arbre (1), dont elle épouse partiellement le contour, par une couche de film fluide, ladite lame (2) étant solidaire d'une barrette (5) fixée par insertion dans une gorge ménagée dans le fourreau (7,10,11) et
- des raidisseurs supérieur (3) et inférieur (4) placés entre la lame souple (2) et le fourreau (7; 10,11) auquel ils sont fixés et adaptés pour amortir les déformations de la lame souple,
**caractérisé en ce que** le raidisseur supérieur (3) et le raidisseur inférieur (4) de chaque sous-ensemble de palier sont fixés à deux barrettes (5) distinctes de deux sous-ensembles adjacents et sont superposés sur au moins une partie de l'une de leurs faces pour coulisser l'un par rapport à l'autre et en sens inverse.

2. Palier selon la revendication 1, caractérisé en ce que, dans chaque sous-ensemble de palier, le raidisseur supérieur (3) présente des parties saillantes (8, 14) sur sa face supérieure, le raidisseur inférieur (4) présente des parties saillantes (8, 14) sur sa face inférieure, les parties saillantes de l'un des raidisseurs étant alternées avec les parties saillantes de l'autre raidisseur.

3. Palier selon la revendication 2, caractérisé en ce que chaque raidisseur (3, 4) est constitué d'une feuille métallique ayant la courbure adéquate et dont l'une des faces présente une alternance de nervures (8) et de gorges (9).

4. Palier selon la revendication 2, caractérisé en ce que les parties saillantes sont constituées par des baguettes (14) à section semi-circulaire, soudées par points sur la feuille constituant chaque raidisseur.

5. Palier selon l'une des revendications 1 à 4, caractérisé en ce que la lame souple (2) d'un sous-ensemble de palier est le prolongement du raidisseur supérieur (3) d'un sous-ensemble contigu, formant une feuille unique, la zone par laquelle cette feuille unique est fixée à la barrette (5) constituant la limite entre la lame souple (2) et le raidisseur supérieur (3).

6. Palier selon l'une quelconque des revendications 1 à 5, caractérisé en ce que l'extrémité fixe d'une lame souple (2) fixée sur une barrette (5) est recouverte par l'extrémité libre de la lame souple (2) du sous-ensemble de palier contigu.

7. Palier selon l'une quelconque des revendications 1 à 6, caractérisé en ce que la barrette (5) est reliée au fourreau (7) par l'intermédiaire d'un ressort de précharge (6).

8. Palier selon la revendication 7, caractérisé en ce que le fourreau étant constitué d'un fourreau intérieur (10) et d'un fourreau extérieur (11), la barrette (5) traverse le fourreau intérieur (10) et est reliée au fourreau extérieur (11) par l'intermédiaire d'un ressort à lame situé entre les fourreaux (10 et 11).

9. Palier selon l'une quelconque des revendications 1 à 6, caractérisé en ce que l'un des éléments de chaque sous-ensemble de palier choisi parmi la lame souple (2), le raidisseur supérieur (3) et le raidisseur inférieur (4) est préformé de manière à assurer la formation d'un coin d'air prononcé lors du démarrage du palier.

10. Palier selon l'une quelconque des revendications 1 à 9, caractérisé en ce que chaque raidisseur supérieur (3) ou tous les raidisseurs supérieurs (3) et inférieurs (4) comportent des découpes.

11. Palier selon l'une quelconque des revendications 1 à 10, caractérisé en ce que la lame souple (2) de chaque sous-ensemble de palier est munie de perforations immédiatement en aval du sous-ensemble contigu.

12. Turbomachine, caractérisée en ce qu'elle comporte un palier radial hydrodynamique à film de fluide selon l'une quelconque des revendications 1 à 11.

13. Aéronef, caractérisé en ce qu'il comporte au moins un palier selon l'une des revendications 1 à 11.

## Patentansprüche

1. Radiales hydrodynamisches Flüssigkeitsfilmlager mit einer Buchse (7, 10, 11), in der eine Welle (1) frei drehbar ist, wobei Buchse (7, 10, 11) und Welle (1) zwischen einander einen ringförmigen Raum bilden, der eine Mehrzahl von Lageruntergruppen enthält, wobei jede der besagten Untergruppen folgende Teile umfaßt:
- einen flexiblen Streifen (2), der von Welle (1), an deren Außenform er teilweise angepaßt ist, durch eine Schicht flüssigen Films getrennt ist, wobei der besagte Streifen (2) fest mit einem durch Einsetzen in eine in Buchse (7, 10, 11) vorgesehene Aussparung angebrachten Stab (5) verbunden ist, und
- Versteifungselemente, ein oberes (3) und ein unteres (4), die zwischen dem flexiblen Streifen (2) und Buchse (7, 10, 11) angeordnet sind, wobei die besagten Versteifungselemente an der besagten Buchse befestigt und so beschaffen sind, daß sie den Verformungen des flexiblen Streifens entgegenwirken,
dadurch gekennzeichnet, daß das obere Versteifungselement (3) und das untere Versteifungselement (4) jeder Lageruntergruppe an zwei getrennten Stäben (5) von zwei anschließenden Untergruppen angebracht und an mindestens einem Teil einer ihrer Oberflächen so überlagert sind, daß sie im Verhältnis zueinander und in entgegengesetzer Richtung gleiten.

2. Lager nach Anspruch 1, dadurch gekennzeichnet, daß in jeder Lageruntergruppe das obere Versteifungselement (3) an seiner oberen Oberfläche Vorsprünge (8, 14) und das untere Versteifungselement (4) an seiner unteren Oberfläche Vorsprünge (8, 14) aufweist, wobei die Vorsprünge eines der Versteifungselemente mit den Vorsprüngen des anderen Versteifungselements abwechseln.

3. Lager nach Anspruch 2, dadurch gekennzeichnet, daß jedes Versteifungselement (3, 4) aus einem Metallblech ausreichender Krümmung besteht und daß eine der Oberflächen des besagten Metallblechs wechselweise Rippen (8) und Aussparungen (9) aufweist.

4. Lager nach Anspruch 2, dadurch gekennzeichnet, daß die Vorsprünge aus Stäben (14) mit halbkreisförmigem Querschnitt bestehen, die durch Punktschweißung an dem jedes Versteifungselement bildenden Blech angebracht sind.

5. Lager nach einem der Ansprüche 1 bis 4, dadurch gekennzeichnet, daß der flexible Streifen (2) einer Lageruntergruppe die Verlängerung des oberen Versteifungselements einer anschließenden Untergruppe bildet, so daß ein einziges Blech entsteht, wobei die Zone, an der das besagte einzelne Blech an Stab (5) befestigt ist, die Grenze zwischen dem flexiblen Streifen (2) und dem oberen Versteifungselement (3) bildet.

6. Lager nach irgendeinem der Ansprüche 1 bis 5, dadurch gekennzeichnet, daß das an einem Stab (5) befestigte feste Ende eines flexiblen Streifens (2) durch das freie Ende des flexiblen Streifens (2) der anschließenden Lageruntergruppe überdeckt ist.

7. Lager nach irgendeinem der Ansprüche 1 bis 6, dadurch gekennzeichnet, daß Stab (5) mit Buchse (7) über eine Vorspannfeder (6) verbunden ist.

8. Lager nach Anspruch 7, dadurch gekennzeichnet, daß bei einer Buchse, die sich aus einer Innenbuchse (10) und einer Außenbuchse (11) zusammensetzt, Stab (5) durch Innenbuchse (10) hindurchführt und über eine zwischen den Buchsen (10 und 11) angeordnete Blattfeder mit Außenbuchse (11) verbunden ist.

9. Lager nach irgendeinem der Ansprüche 1 bis 6, dadurch gekennzeichnet, daß eines der Elemente jeder Lageruntergruppe, und zwar der flexible Streifen (2), das obere Versteifungselement (3) oder das untere Versteifungselement (4), so vorgeformt ist, daß beim Anlauf des Lagers das Entstehen eines ausgeprägten Luftkissens gewährleistet wird.

10. Lager nach irgendeinem der Ansprüche 1 bis 9, dadurch gekennzeichnet, daß jedes obere Versteifungselement (3) bzw. alle oberen Versteifungselemente (3) und unteren Versteifungselemente (4) mit Ausschnitten versehen sind.

11. Lager nach irgendeinem der Ansprüche 1 bis 10, dadurch gekennzeichnet, daß der flexible Streifen (2) jeder Lageruntergruppe unmittelbar nach der anschließenden Untergruppe mit Perforationen versehen ist.

12. Turbotriebwerk, dadurch gekennzeichnet, daß es ein radiales hydrodynamisches Flüssigkeitsfilmlager nach irgendeinem der Ansprüche 1 bis 11 umfaßt.

13. Flugzeug, dadurch gekennzeichnet, daß es mindestens ein Lager nach einem der Ansprüche 1 bis 11 umfaßt.

## Claims

1. Radial hydrodynamic fluid-film bearing comprising a sleeve (7, 10, 11) in which a shaft (1) is free to rotate, whereby sleeve (7, 10, 11) and shaft (1) form between them an annular space accommodating a plurality of bearing sub-assemblies, each of them with :
- a flexible strip (2) separated from shaft (1), the contour of which it partly follows, by a layer of fluid film, said strip (2) being firmly connected with a bar (5) secured by insertion in a recess provided in sleeve (7, 10, 11), and
- stiffening elements - an upper stiffening element (3) and a lower stiffening element (4) - located between flexible strip (2) and sleeve (7, 10, 11), said stiffening elements being secured to said sleeve and so designed as to counteract the deformations of the flexible strip,
characterised in that upper stiffening element (3) and lower stiffening element (4) of each bearing sub-assembly are attached to two different bars (5) of two adjacent sub-assemblies and overlap on at least part of one of their faces so as to slide in relation to one another and in opposite directions.

2. Bearing according to claim 1, characterised in that, in each bearing sub-assembly, upper stiffening element (3) has projecting parts (8, 14) on its upper face, whereas lower stiffening element (4) has projecting parts (8, 14) on its lower face, with the projecting parts of one of the stiffening elements alternating with the projecting parts of the other stiffening element.

3. Bearing according to claim 2, characterised in that each stiffening element (3, 4) consists of a metallic sheet of adequate curvature, one of the faces of which is alternately provided with ribs (8) and recesses (9).

4. Bearing according to claim 2, characterised in that the projecting parts are constituted by rods (14) with semi-circular cross-section, point-welded to the sheet constituting each stiffening element.

5. Bearing according to one of claims 1 to 4, characterised in that flexible strip (2) of a bearing sub-assembly is the extension of upper stiffening element (3) of an adjacent sub-assembly so as to form a single sheet, whereby the zone by which said single sheet is secured to bar (5) constitutes the limit between flexible strip (2) and upper stiffening element (3).

6. Bearing according to any one of claims 1 to 5, characterised in that the fixed end of a flexible strip (2) secured to a bar (5) is covered by the free end of flexible strip (2) of the adjacent bearing sub-assembly.

7. Bearing according to any one of claims 1 to 6, characterised in that bar (5) is connected with sleeve (7) through a prestressing spring (6).

8. Bearing according to claim 7, characterised in that with the sleeve comprising an inner sleeve (10) and an outer sleeve (11) bar (5) passes through inner sleeve (10) and is connected with outer sleeve (11) by means of a blade spring located between the sleeves (10 and 11).

9. Bearing according to any one of claims 1 to 6, characterised in that one of the elements of each bearing sub-assembly, i.e. flexible strip (2), upper stiffening element (3) or lower stiffening element (4), is preformed in such a manner as to ensure the formation of a marked air cushion when the bearing is started up.

10. Bearing according to any one of claims 1 to 9, characterised in that each upper stiffening element (3) or all upper stiffening elements (3) and lower stiffening elements (4) are provided with cut-outs.

11. Bearing according to any one of claims 1 to 10, characterised in that flexible strip (2) of each bearing sub-assembly is provided with perforations directly downstream of the adjacent sub-assembly.

12. Turbine engine, characterised in that it comprises a radial hydrodynamic fluid-film bearing according to any one of claims 1 to 11.

13. Aircraft, characterised in that it comprises at least one bearing according to one of claims 1 to 11.
